# FASCICULE DE BREVET EUROPEEN

(11) **EP 3 181 461 B1**
(45) Date de publication et mention de la délivrance du brevet: **07.10.2020**
(21) Numéro de dépôt: 16203881.4
(22) Date de dépôt: 13.12.2016
(51) Int. Cl.: B64G 1/22

(54) **DISPOSITIF DE MAINTIEN ET DE LIBERATION D'APPENDICES**
HALTE- UND LÖSEVORRICHTUNG FÜR ANHÄNGE
DEVICE FOR HOLDING AND RELEASING APPENDAGES

(30) Priorité: 18.12.2015 FR 1502636
(43) Date de publication de la demande: 21.06.2017
(73) Titulaire: Thales, 92400 Courbevoie (FR)
(72) Inventeur: BLANC, Alain-Vincent, 06156 CANNES LA BOCCA CEDEX (FR); COMBERNOUX, Thomas, 06156 CANNES LA BOCCA CEDEX (FR); MICHELLET, François, 06156 CANNES LA BOCCA CEDEX (FR); CHASSOULIER, Damien, 06370 MOUANS-SARTOUX (FR)
(74) Mandataire: Collet, Alain

(56) Documents cités:
- EP-A1- 2 319 764
- US-A- 5 248 233
- US-A1- 2005 084 364
- US-A1- 2012 076 614

## Description

La présente invention concerne particulièrement mais non exclusivement le domaine spatial et, plus précisément, consiste en un tirant actif permettant le maintien et la libération sans choc d'appendices, par exemple, spatiaux.

Par appendices spatiaux, on entend des équipements spatiaux destinés à être déployés dans l'espace, tels que des générateurs solaires ou des antennes par exemple. L'invention consiste en une solution simple et robuste permettant la libération sans choc de tels appendices spatiaux.

Un tirant actif a pour fonction, dans un premier temps, de maintenir en configuration stockée un ou plusieurs appendices spatiaux, c'est-à-dire, de façon générale, des éléments mobiles déployables de part et d'autre de la caisse du satellite, et, dans un second temps, de libérer sans choc ces appendices afin de les déployer. Le système de maintien en configuration stockée et de libération des appendices est classiquement constitué principalement d'un écrou pétalable et d'un tirant de mise en tension. Concrètement, dans les dispositifs connus, le tirant participe, avec l'écrou, à la mise en tension d'une série d'éléments empilés, tels que des générateurs solaires repliés les uns sur les autres dans le but de minimiser le volume du satellite lorsqu'il est disposé dans la coiffe d'un lanceur.

Cependant, il est connu que, dans ce type de dispositif, le tirant présente des défauts géométriques qui peuvent être importants, en particulier si le nombre d'éléments empilés est élevé. Les défauts géométriques peuvent être des défauts d'inclinaison ou de délocalisation par exemple. Ces défauts géométriques peuvent engendrer des défauts dynamiques se traduisant par des efforts radiaux ou des moments s'exerçant aux extrémités du tirant.

La non prise en compte de ces défauts peut engendrer de graves dysfonctionnements, allant jusqu'au non déploiement des appendices spatiaux, et pouvant donc impliquer une perte de la mission.

Un autre problème connu réside dans le choc pouvant se produire lors de la libération du tirant. L'écrou, mentionné précédemment, est chargé de libérer le tirant. Or, le tirant se trouve, au moment de sa libération, dans un état contraint et sa brusque libération peut entraîner des chocs pouvant altérer les appendices spatiaux ou le satellite lui-même. Dans le cadre de certains dispositifs actuels, le problème est double. En effet, dans un premier temps, le tirant est libéré par un verrou pyrotechnique dont l'explosion engendre un premier choc. Ensuite, le tirant étant sous tension avant d'être libéré, sa libération brusque, déjà évoquée, peut engendrer des dégradations au niveau des appendices spatiaux ou de la structure porteuse.

Dans le but de minimiser ce problème, des écrous dits sans choc, ou « low shock » selon l'expression anglo-saxonne consacrée, ont été mis au point. Ce type d'écrous, complexe, est généralement mono-coup et peut être reconditionné. Un exemple de mécanisme permettant de réduire les chocs lors de la libératiion d'un tirant est par exemple décrit dans le document US 5 248 233 A. Cependant, l'aptitude « sans choc » de ces écrous n'est applicable qu'au déclenchement de la libération du tirant, et non à la libération des appendices eux-mêmes. En effet, les défauts géométriques du tirant ne sont pas réellement compensés et, particulièrement dans le cas où le tirant est de grande dimension, il subsiste une détente brusque du tirant pouvant engendrer un choc parfois important, le tirant venant percuter les appendices spatiaux. Ceci s'explique notamment par le fait que la libération du tirant sous contrainte reste sensible aux déviations angulaires du tirant. La demanderesse a même constaté que les chocs générés par la détente du tirant étaient le plus souvent beaucoup plus important que ceux générés par l'écrou, même pyrotechnique.

Le brevet EP 2 319 764 B1 déposé le premier octobre 2010 au nom de la demanderesse décrit un tirant réalisé dans un matériau présentant une dilation thermique contrôlée. Grâce au chauffage du tirant il est possible de l'allonger avant de libérer l'écrou et ainsi de limiter les chocs dus à la détente brusque du tirant. Cette solution présente l'inconvénient de limiter le choix du matériau dans lequel est réalisé le tirant. En effet, il peut y avoir incompatibilité entre la dilatation thermique souhaitée et la résistance mécanique nécessaire pour remplir la fonction de maintien des appendices, notamment lors de la phase de lancement où le satellite est soumis à des vibrations importantes. De plus, le tirant peut être de grande longueur et il est alors nécessaire de le chauffer sur toute sa longueur pour assurer sa dilatation. La mise en œuvre du réchauffeur sur toute la longueur du tirant est compliquée à mettre en œuvre.

L'invention propose une solution simple et robuste permettant de limiter les chocs dus à la détente du tirant tout en permettant l'utilisation de tirants classiques sans se soucier des propriétés thermiques de ceux-ci.

La solution repose principalement sur la dissociation des propriétés de résistance mécanique d'une part et thermique d'autre part. L'invention propose l'ajout d'un composant supplémentaire ne remplissant que la fonction de dilatation, par exemple thermique. L'invention propose un composant pouvant être standardisé notamment pour pouvoir être monté à n'importe quelle position dans l'assemblage maintenant les appendices avant leur libération.

A cet effet, l'invention a pour objet un dispositif de maintien et de libération d'appendice, le dispositif comprenant :
- une embase fixe,
- un tirant s'étendant selon un axe entre deux extrémités,
- un mécanisme solidaire de l'embase et assurant le maintien temporaire d'une première des extrémités du tirant, une manœuvre du mécanisme permettant de libérer le tirant de l'embase, le mécanisme comprenant une pince destinée à maintenir la première extrémité du tirant et un dispositif de manœuvre de la pince pour libérer la première extrémité du tirant,
- un embout solidaire d'une seconde des extrémités du tirant,
- au moins un appendice maintenu temporairement entre l'embase et l'embout,
- un composant disposé entre le mécanisme et l'embout, e composant étant indépendant du mécanisme,
- et une commande du composant permettant de modifier une dimension caractéristique du composant selon l'axe entre deux valeurs, pour une première des deux valeurs, le composant assurant une tension du tirant et pour une seconde des deux valeurs, la tension du tirant étant réduite, la commande étant indépendante du mécanisme.

L'indépendance du composant et de sa commande par rapport au mécanisme permet de dissocier complètement les deux fonctions. Autrement dit, la commande du composant n'entraine pas de manœuvre du mécanisme. De même, il est possible de manœuvrer le mécanisme sans commander le composant.

Ainsi, le composant n'a pas de position prédéfinie entre le mécanisme et l'embout. Cette indépendance laisse toute liberté de positionnement du composant.

De plus si la tension dans le tirant est jugée inadaptée, trop forte ou trop faible, il est possible d'agir sur le composant pour modifier la tension du tirant sans pour cela agir sur le mécanisme.

Enfin, si le composant ou sa commande se trouvait défaillant, il est tout de même possible de libérer le tirant par une manœuvre du mécanisme. Cette manœuvre se fait dans un fonctionnement dégradé où la tension du tirant n'est pas réduite avant libération du tirant.

Le composant a avantageusement une forme de rondelle configurée pour glisser le long du tirant lors de l'assemblage du dispositif.

Le tirant possède une dimension caractéristique perpendiculairement à son axe entre ses deux extrémités. Le composant est avantageusement percé avec une dimension caractéristique supérieure à la dimension caractéristique du tirant de manière à pouvoir glisser le long du tirant lors de l'assemblage du dispositif.

Le composant peut être disposé à différentes positions dans l'assemblage comme par exemple entre mécanisme et l'embase ou entre l'embase et l'au moins un appendice ou entre l'au moins un appendice et l'embout. Le dispositif peut comprendre au moins deux appendices. Le composant peut alors être disposé entre deux appendices.

Le composant comprend avantageusement un matériau à dilatation thermique déterminée. La commande comprend alors un élément permettant d'apporter ou d'extraire de l'énergie thermique du composant. Le matériau est avantageusement à mémoire de forme. L'élément peut être un réchauffeur permettant une élévation de température du matériau du composant.

Pour la seconde des deux valeurs de dimension caractéristique du composant selon l'axe, la tension du tirant est avantageusement nulle.

Le dispositif comprend avantageusement en outre un ressort disposé entre la seconde extrémité du tirant et l'au moins un appendice, le ressort étant configuré pour extraire la première extrémité du tirant hors du mécanisme après manœuvre du mécanisme.

L'invention sera mieux comprise et d'autres avantages apparaîtront à la lecture de la description détaillée d'un mode de réalisation donné à titre d'exemple, description illustrée par le dessin joint dans lequel :
la figure 1a représente schématiquement un satellite comprenant des appendices spatiaux en position stockée ;
la figure 1b représente le satellite de la figure 1a dont les appendices spatiaux sont en cours de déploiement ;
la figure 1c représente le satellite de la figure 1a dont les appendices spatiaux sont en position déployée ;
la figure 2a représente une variante de dispositif conforme à l'invention dans une configuration où un tirant est sous tension ;
la figure 2b représente le dispositif de la figure 2a dans une configuration où la tension du tirant est libérée,
les figures 3, 4 et 5 représentent d'autres variantes de dispositifs conformes à l'invention.

Par souci de clarté, les mêmes éléments porteront les mêmes repères dans les différentes figures.

La description qui suit est faite en rapport à un satellite et au déploiement de ses appendices. Il est bien entendu que l'invention n'est pas limitée au domaine spatial et peut être mise en œuvre dans d'autres domaines où des appendices peuvent être déployés. Il peut s'agir d'antennes terrestres, de capteurs sous-marins...

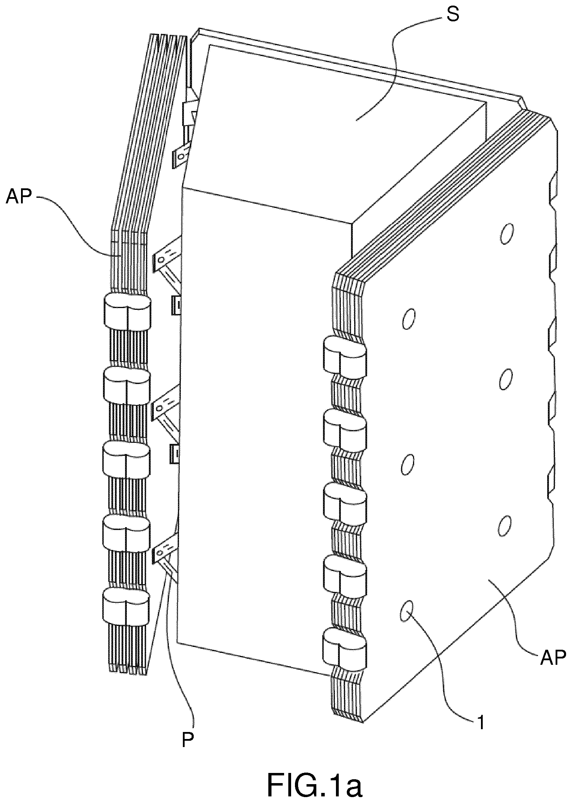

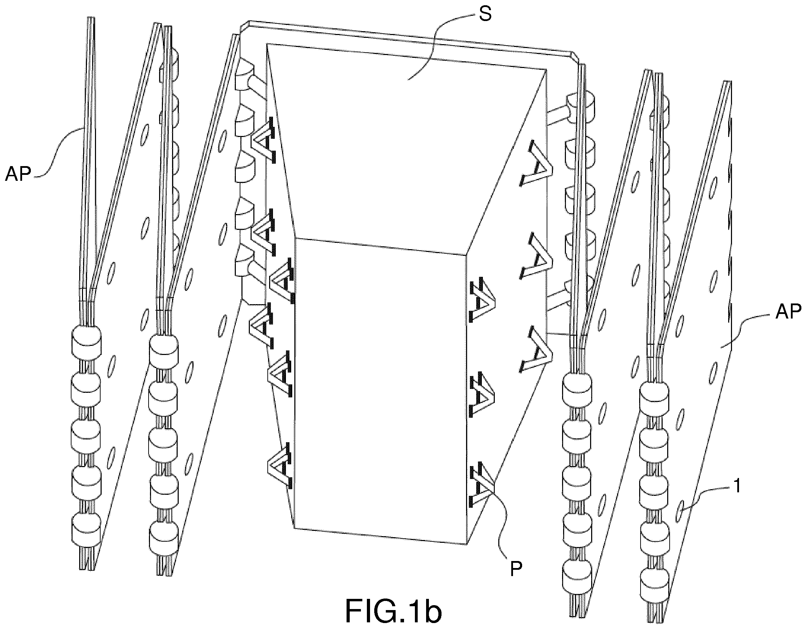

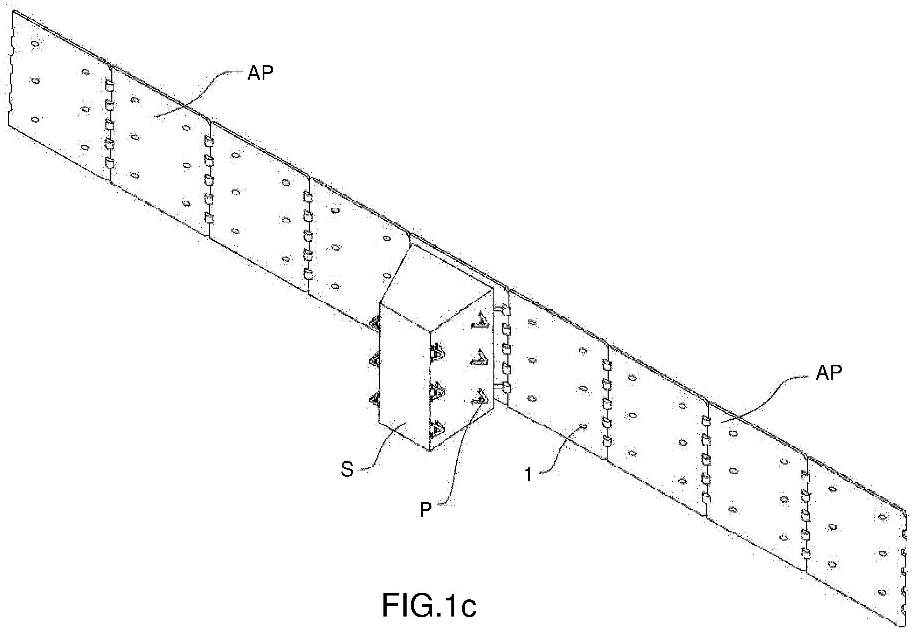

Les figures 1a, 1b, 1c ont pour objectif de présenter de manière très simple un exemple de satellite présentant des appendices spatiaux déployables. Sur ces trois figures, est représenté un satellite constitué d'une caisse S avec, de part et d'autre de la caisse S, des appendices spatiaux AP, tels que des générateurs solaires. Sur la figure 1a, les appendices spatiaux AP sont en position stockée. Les appendices spatiaux AP sont ici constitués chacun de quatre panneaux repliés les uns contre les autres et maintenus en place par un dispositif adapté. Ce dispositif adapté comprend ici des tripodes P sur lesquels viennent reposer les appendices spatiaux AP repliés, chaque tripode P coopérant avec un dispositif non représenté constitué par exemple d'un écrou pétalable associé à un tirant, chaque tirant traversant chaque panneau au niveau d'une douille 1 ménagée et intégrée au panneau. Comme on le constate sur les figures 1a, 1b, 1c, il y a dans ce contexte, pour chacun des deux appendices spatiaux AP, six tripodes P, associés à six écrous et six tirants, et six douilles par panneau.

La position stockée permet au satellite d'être intégré à la coiffe d'un lanceur spatial chargé de son expédition.

La figure 1b représente le même satellite que sur la figure 1a, mais dont les appendices spatiaux AP sont en cours de déploiement. En effet, le moyen adapté de maintien en place des appendices spatiaux AP permet la libération des appendices spatiaux AP au moment opportun, et les panneaux solaires se déplient. Le déploiement peut être contrôlé par un moteur électrique ou par des articulations auto motorisées non représentés.

Sur la figure 1c, les appendices spatiaux AP sont déployés, permettant au satellite de mener à bien sa mission.

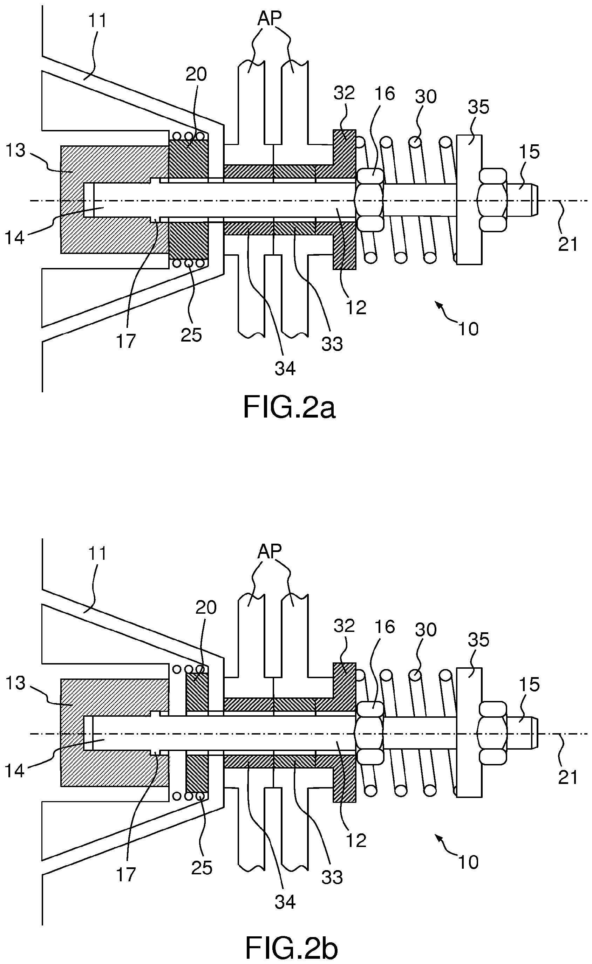

Pour simplifier la représentation des figures 2a et 2b, les appendices AP ne sont pas représentés. De plus, la longueur du tirant doit être adaptée au nombre d'appendices que l'on souhaite maintenir en position stockée.

Les figures 2a et 2b représentent une première variante de dispositif 10 de maintien et de la libération des appendices AP. Dans les différentes variantes décrites, deux appendices AP sont représentés. Il est bien entendu que l'invention peut être mise en œuvre quelque soit le nombre d'appendices AP. Le dispositif 10 comprend une embase 11, formée par exemple d'un tripode P, un tirant 12 assurant le maintien des appendices AP en configuration stockée et un mécanisme 13 de libération du tirant 12. Le mécanisme 13 est solidaire de l'embase 11. Le tirant 12 s'étend entre deux extrémités 14 et 15. Dans la configuration de la figure 2a, les appendices AP sont maintenus les uns contre les autres. Cette configuration est notamment utilisée dans un satellite lorsque les panneaux du satellite sont repliés contre la caisse du satellite. Cette configuration est utilisée pour le lancement du satellite lorsque celui-ci est rangé dans la coiffe d'un lanceur et est couramment appelée configuration de stockage. Dans cette configuration, l'extrémité 14 est maintenue solidaire de l'embase 11 au moyen du mécanisme 13 et à l'extrémité 15, est par exemple disposé un embout 16 formant une butée contre laquelle viennent s'appuyer les appendices AP. La position de l'embout 16 peut être fixe sur l'extrémité 15. L'embout 16 peut être un simple épaulement faisant partie intégrante du tirant 12. Alternativement, la position de l'embout 16 peut être réglable le long du tirant 16. Pour réaliser ce réglage, l'embout peut être un écrou 16 vissé sur le tirant 12. Le tirant 12 traverse les appendices AP qui se trouvent pincés entre l'embase 11 et l'écrou 16. Mettre en œuvre un embout 16 réglable, notamment comme un écrou, permet de régler l'effort de pincement des appendices AP. Cet effort est notamment calibré en fonction des vibrations que le satellite peut subir lors de son lancement et de l'inertie des appendices AP.

Le mécanisme 13, permettant la libération du tirant 12, comprend une pince destinée à maintenir l'extrémité 14 du tirant 12 en configuration de stockage. Le mécanisme 13 peut maintenir le tirant 12 en exerçant un serrage radial sur le tirant 12. Autrement dit, le maintien du tirant 12 est réalisé par adhérence. Alternativement, le mécanisme 13 peut maintenir le tirant 12 par obstacle, par exemple en prenant appui contre un collet 17 du tirant 12. Lorsque l'on souhaite déployer les appendices AP, la pince est manœuvrée pour libérer l'extrémité 14 du tirant 12.

La manœuvre de la pince peut être réalisée par un dispositif mécanique classique par exemple à came manœuvré par un moteur. Pour assurer un déploiement plus rapide, il est possible d'ouvrir la pince au moyen d'un dispositif pyrotechnique.

Lors du lancement d'un satellite, celui-ci peut être soumis à des vibrations importantes. Il est alors important d'assurer le maintien mécanique des appendices AP en appui contre la caisse S et plus précisément contre l'embase 11. Pour assurer ce maintien, même en présence de vibration, le tirant 12 est précontraint. Plus précisément, le tirant 12 est maintenu en tension entre ses deux extrémités 14 et 15. Comme on l'a vu plus haut, cette précontrainte peut être réglée au moyen de l'écrou 16. Ce réglage permet de s'affranchir des tolérances des différentes pièces mécaniques pincées entre l'embase 11 et l'écrou 16 et des tolérances du tirant lui même.

Selon l'invention, pour limiter les chocs lors de l'ouverture de la pince, le dispositif 10 comprend un composant 20 permettant sur commande de réduire ou d'annuler la tension du tirant 12. Le composant 20 est distinct du tirant 12 ce qui permet de choisir plus librement le matériau du tirant 12 en fonction de la résistance mécanique nécessaire au maintien des appendices AP sous tension, même en cas de vibrations importantes. Le tirant 12 est par exemple réalisé en acier. De plus, le composant 20 est distinct du mécanisme 13.

Le composant 20 a par exemple la forme d'une rondelle traversée par le tirant 12. Le composant 20 a une forme coaxiale du tirant 12. La forme d'une rondelle coaxiale permet d'équilibrer axialement les efforts exercés par la rondelle sur l'embase 11 et sur le mécanisme 13 et éviter des efforts radiaux. D'autres formes pour le composant 20 sont bien entendu possibles. La rondelle est une pièce mécanique distincte du tirant 12. La rondelle est configurée pour glisser le long du tirant 12 lors de l'assemblage du dispositif 10. Le tirant 12 s'étend selon un axe 21 qui en configuration stockée est perpendiculaire au plans des appendices AP repliés les uns contre les autres. Le tirant 12 possède une dimension caractéristique perpendiculairement à son axe 21 entre ses deux extrémités 14 et 15. De façon la plus simple, le tirant 12 est par exemple une tige à section circulaire. Le diamètre de cette section forme la dimension caractéristique du tirant 12 perpendiculairement à son axe 21. Il est bien entendu que d'autres formes de section sont possibles dans le cadre de l'invention. Le composant 20 est percé avec une dimension caractéristique supérieure à la dimension caractéristique du tirant 12. La dimension caractéristique du perçage du composant 20 est définie de manière à permettre au composant 20 de glisser le long du tirant 12 lors de l'assemblage du dispositif 10.

Une commande du composant 20 permet de modifier une autre dimension caractéristique du composant 20. Dans l'exemple représenté, cette autre dimension caractéristique est l'épaisseur de la rondelle mesurée selon l'axe 21 du tirant 12.

La dimension caractéristique du composant 20 selon l'axe 21 peut évoluer entre deux valeurs. Pour une première des deux valeurs, le composant 20 assure une tension du tirant 12 et pour une seconde des deux valeurs la tension du tirant 12 est réduite ou annulée. Afin d'éviter complètement l'apparition de chocs lors de la libération du tirant 12, il est avantageux de définir le composant 20 de manière à annuler la tension dans le tirant 12. Physiquement pour être certain d'obtenir l'annulation complète de la tension, il convient de prévoir un jeu fonctionnel positif après manœuvre du composant 20. Ce jeu peut néanmoins être préjudiciable au déploiement des appendices AP. Alternativement, après manœuvre du composant 20, on peut conserver une légère tension dans le tirant 20 afin d'assurer un contact entre les appendices AP.

Dans l'exemple représenté, le composant 20 se rétreint pour libérer la tension du tirant 12 entre sa configuration de la figure 2a et celle de la figure 2b. Il est également possible de concevoir un montage inverse où le composant 20 s'expanse pour libérer la tension du tirant 12.

La variation dimensionnelle du composant 20 selon l'axe 21 peut être assurée au moyen d'un dispositif mécanique où l'on déplace deux faces opposées du composant 20 par exemple au moyen de cames motorisées. De façon plus simple, le composant peut comprendre un matériau à dilatation thermique déterminée et contrôlée. La variation dimensionnelle du composant 20 est assurée par un élément 25 permettant d'apporter ou d'extraire de l'énergie thermique du composant. De façon simple, l'élément 25 peut être un réchauffeur formé d'une résistance électrique entourant le composant 20. En effet, à bord d'un satellite, il est possible d'utiliser de l'énergie électrique stockée dans des batteries. Parmi les appendices, on trouve couramment des panneaux solaires permettant de recharger les batteries ultérieurement après déploiement des appendices AP. Le composant 20 et l'élément 25 permettant d'assurer la commande de la variation dimensionnelle sont indépendants du mécanisme 13. Cette indépendance permet de choisir plus librement les modes de réalisation composant 20 et de l'élément 25.

Le matériau à dilatation thermique déterminée du composant 20 peut être un matériau classique à fort coefficient de dilatation thermique. Parmi les alliages métalliques, il est possible d'utiliser un alliage de zinc connu pour son coefficient de dilatation thermique important. Certains matériaux plastiques à base de polypropylène ou de polyamide présentent des coefficients de dilatation thermique plus élevés mais sont aussi sujet au fluage qui risque faire baisser la tension du tirant 12 si le maintien en configuration stocké se prolonge. Les dimensions du composant 20 et notamment son épaisseur selon l'axe 21 sont définies en fonction du coefficient de dilatation thermique pour atteindre la variation dimensionnelle souhaitée en fonction des températures que peuvent prendre le composant 20 lorsque le réchauffeur 25 est activé ou non.

Avantageusement, afin de réduire les dimensions du composant 20, son matériau est à mémoire de forme. On peut par exemple choisir un alliage de titane et de nickel. Avec ce type de matériau on peut atteindre une amplitude dimensionnelle importante pour une faible épaisseur à une température ambiante. Cette amplitude importante est obtenue par modification de structure métallographique de l'alliage. Le passage entre deux structures souvent appelées martensitique à basse température et austénitique à haute température permet d'obtenir une variation dimensionnelle importante. La figure 2a représente le composant 20 à température ambiante et la figure 2b à une température plus élevée que la température de transition entre les structures métallographiques, par exemple de l'ordre de 100°C, si le matériau a une température de transition de l'ordre de 85°C. La figure 2b a été représentée de façon schématique et dans la pratique, lorsque le composant 20 se retreint, le mécanisme 13 reste au contact du composant 20, ce qui permet de réduire la tension dans le tirant 12.

Le dispositif comprend un ressort 30 permettant d'écarter le tirant 12 de l'embase 11 dans un mouvement de translation selon l'axe 21. Le ressort 30 est indépendant de la tension du tirant 12 obtenue par le composant 20 dans sa configuration de la figure 2a. Ainsi il est possible de tendre le tirant 12 de façon à s'assurer que les appendices AP restent au contact de l'embase 11 lors du lancement du satellite même si celui-ci est soumis à des vibrations importantes et de façon indépendante obtenir un effort déterminé aidant le tirant 12 à se dégager des appendices lors du déploiement lorsque le satellite a atteint la position où il remplira sa mission.

Plus précisément, à l'extrémité 15 du tirant 12, l'écrou 16, coopérant avec un filetage du tirant 12, permet de maintenir en pression les appendices AP et une ou plusieurs entretoises 32, 33, 34 entre l'écrou 16 et l'embase 11. Il est même possible de se passer des entretoises et même de l'écrou 16 en disposant le ressort 30 entre l'extrémité 15 du tirant 12 et l'embase 11.

Le serrage de l'écrou 16 permet de régler la tension du tirant 12, tension qui ultérieurement sera relâchée par le composant 20. Un second écrou 35 coopérant avec le même filetage du tirant 12 (ou éventuellement un filetage distinct) maintient le ressort 30 entre l'entretoise 32 et l'écrou 35. Ainsi après relâchement de la tension du tirant 12 au moyen du composant 20, le ressort 30 repousse l'entretoise 32 de l'écrou 16 permettant ainsi au tirant 12 se dégager.

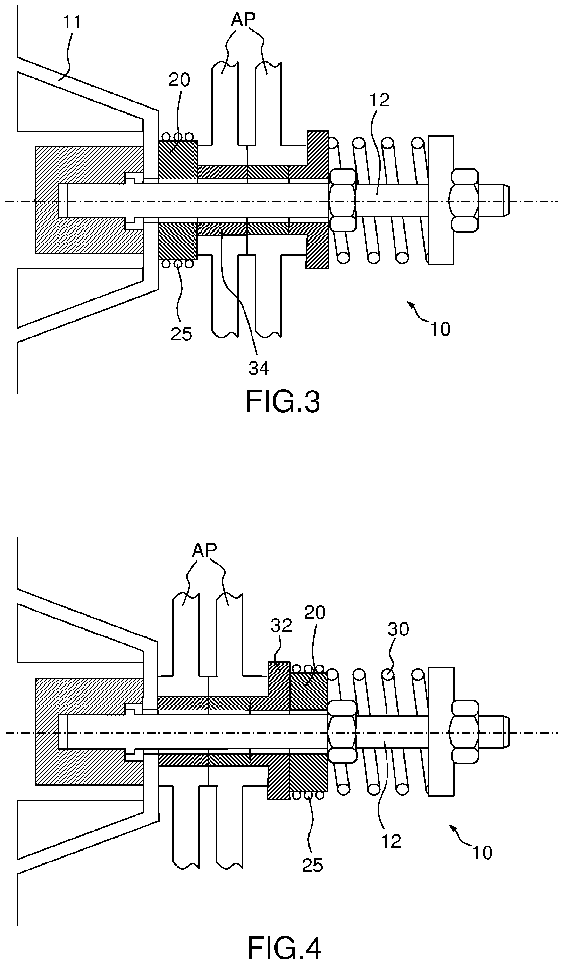

La figure 3 représente une variante du dispositif 10 dans laquelle le composant 20 est disposé entre l'embase et un des appendices AP.

La figure 4 représente une autre variante du dispositif 10 dans laquelle le composant 20 est disposé entre un appendice AP et l'embout formé par l'écrou 16. Il est possible, mais pas obligatoire, de disposer l'entretoise 38 entre l'écrou 16 et l'appendice AP.

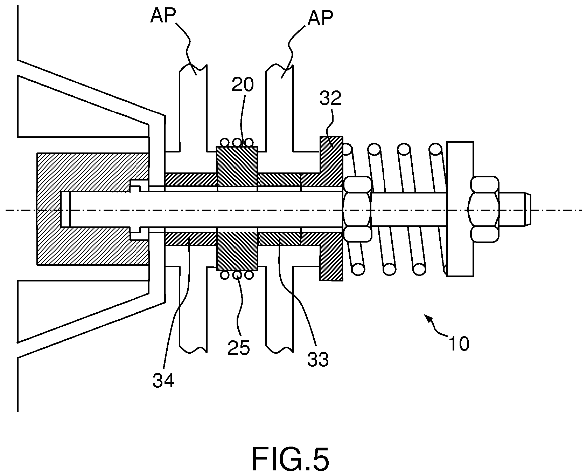

La figure 5 représente encore une variante du dispositif 10 dans laquelle le composant 20 est disposé entre deux appendices AP.

De façon plus générale, le composant 20 peut être disposé entre deux pièces maintenues en pression par le tirant 12. Le choix de la position du composant 20 peut se faire en fonction de la facilité d'accès à la commande 25. L'indépendance du composant 20 et de sa commande 25 par rapport au mécanisme 13 de libération du tirant 12 facilite ce choix.

## Revendications

1. Dispositif de maintien et de libération d'appendice (AP), le dispositif (10) comprenant :
• une embase (11) fixe,
• un tirant (12) s'étendant selon un axe (21) entre deux extrémités (14, 15),
• un mécanisme (13) solidaire de l'embase et assurant le maintien temporaire d'une première des extrémités (14) du tirant (12), une manœuvre du mécanisme permettant de libérer le tirant (12) de l'embase (11), le mécanisme (13) comprenant une pince destinée à maintenir la première extrémité (14) du tirant (12),
• un embout (16) solidaire d'une seconde des extrémités (15) du tirant (12),
• au moins un appendice (AP) maintenu temporairement entre l'embase (11) et l'embout (16),
• un composant (20) disposé entre le mécanisme (13) et l'embout (16), composant étant indépendant du mécanisme (13),
• et une commande (25) du composant (20) permettant de modifier une dimension caractéristique du composant (20) selon l'axe (21) entre deux valeurs, pour une première des deux valeurs, le composant (20) assurant une tension du tirant (12) et pour une seconde des deux valeurs, la tension du tirant (12) étant réduite, la commande (25) étant indépendante du mécanisme (13), le dispositif étant **caractérisé en ce qu'**il comprend en outre un dispositif de manœuvre de la pince pour libérer la première extrémité du tirant.

2. Dispositif selon la revendication 1, dans lequel le composant (20) a une forme de rondelle configurée pour glisser le long du tirant (12) lors de l'assemblage du dispositif (10).

3. Dispositif selon l'une des revendications précédentes, dans lequel le tirant (12) possède une dimension caractéristique perpendiculairement à son axe (21) entre ses deux extrémités, et dans lequel le composant (20) est percé avec une dimension caractéristique supérieure à la dimension caractéristique du tirant (12) de manière à pouvoir glisser le long du tirant lors de l'assemblage du dispositif (10).

4. Dispositif selon l'une des revendications précédentes, dans lequel le composant (20) est disposé entre mécanisme (13) et l'embase (11).

5. Dispositif selon l'une des revendications 1 à 3, dans lequel le composant (20) est disposé entre l'embase (11) et l'au moins un appendice (AP).

6. Dispositif selon l'une des revendications 1 à 3, dans lequel le composant (20) est disposé entre l'au moins un appendice (AP) et l'embout (16).

7. Dispositif selon l'une des revendications 1 à 3, comprenant au moins deux appendices (AP), et dans lequel le composant (20) est disposé entre deux appendices (AP).

8. Dispositif selon l'une des revendications précédentes, dans lequel le composant (20) comprend un matériau à dilatation thermique déterminée et dans lequel la commande comprend un élément (25) permettant d'apporter ou d'extraire de l'énergie thermique du composant (20).

9. Dispositif selon la revendication 8, dans lequel le matériau est à mémoire de forme.

10. Dispositif selon l'une des revendications 8 ou 9, dans lequel l'élément est un réchauffeur (25) permettant une élévation de température du matériau du composant (20).

11. Dispositif selon l'une des revendications précédentes, dans lequel pour la seconde des deux valeurs de dimension caractéristique du composant (20) selon l'axe (21), la tension du tirant (12) est nulle.

12. Dispositif selon l'une des revendications précédentes, comprenant en outre un ressort (30) disposé entre la seconde extrémité (15) du tirant (12) et l'au moins un appendice (AP), le ressort (30) étant configuré pour extraire la première extrémité (14) du tirant (12) hors du mécanisme (13) après manœuvre du mécanisme (13).

## Patentansprüche

1. Halte- und Lösevorrichtung für einen Anhang (AP), wobei die Vorrichtung (10) Folgendes beinhaltet:
• einen festen Sockel (11),
• ein Zugelement (12), welches sich entlang einer Achse (21) zwischen zwei Enden erstreckt (14, 15),
• einen fest mit dem Sockel verbundenen Mechanismus (13), welcher den zeitweiligen Halt eines ersten der Enden (14) des Zugelements (12) sicherstellt, wobei eine Betätigung des Mechanismus es ermöglicht, das Zugelement (12) vom Sockel (11) zu lösen, wobei der Mechanismus (13) eine Zange beinhaltet, die dazu bestimmt ist, das erste Ende (14) des Zugelements (12) zu halten,
• einen fest mit einem zweiten der Enden (15) des Zugelements (12) verbundenen Stopfen (16),
• mindestens einen Anhang (AP), welcher zeitweilig zwischen dem Sockel (11) und dem Stopfen (16) gehalten wird,
• eine zwischen dem Mechanismus (13) und dem Stopfen (16) angeordnete Komponente (20), wobei die Komponente von dem Mechanismus (13) unabhängig ist,
• und eine Steuerung (25) der Komponente (20), die es ermöglicht, eine charakteristische Abmessung der Komponente (20) entlang der Achse (21) zwischen zwei Werten zu ändern, wobei bei einem ersten der beiden Werte, die Komponente (20) eine Spannung des Druckelements (12) sicherstellt, und bei einem zweiten der beiden Werte, die Spannung des Zugelements (12) reduziert ist, indem die Steuerung (25) vom Mechanismus (13) unabhängig ist, wobei die Vorrichtung **dadurch gekennzeichnet ist, dass** sie zudem eine Betätigungsvorrichtung der Zange zum Lösen des ersten Endes des Zugelements beinhaltet.

2. Vorrichtung nach Anspruch 1, wobei die Komponente (20) eine Unterlegscheibenform aufweist, die dazu konfiguriert ist, bei der Montage der Vorrichtung (10) entlang des Zugelements (12) zu gleiten.

3. Vorrichtung nach einem der vorhergehenden Ansprüche, wobei das Zugelement (12) eine charakteristische Abmessung rechtwinklig zu seiner Achse (21) zwischen seinen beiden Enden aufweist, und wobei die Komponente (20) mit einer charakteristischen Abmessung größer als die charakteristische Abmessung des Zugelements (12) derart durchbohrt ist, dass sie bei der Montage der Vorrichtung (10) entlang des Zugelements gleiten kann.

4. Vorrichtung nach einem der vorhergehenden Ansprüche, wobei die Komponente (20) zwischen dem Mechanismus (13) und dem Sockel (11) angeordnet ist.

5. Vorrichtung nach einem der Ansprüche 1 bis 3, wobei die Komponente (20) zwischen dem Sockel (11) und dem mindestens einem Anhang (AP) angeordnet ist.

6. Vorrichtung nach einem der Ansprüche 1 bis 3, wobei die Komponente (20) zwischen dem mindestens einen Anhang (AP) und dem Stopfen (16) angeordnet ist.

7. Vorrichtung nach einem der Ansprüche 1 bis 3, beinhaltend mindestens zwei Anhänge (AP), und wobei die Komponente (20) zwischen zwei Anhängen (AP) angeordnet ist.

8. Vorrichtung nach einem der vorhergehenden Ansprüche, wobei die Komponente (20) mindestens ein Material mit bestimmter Wärmedehnung beinhaltet, und wobei die Steuerung ein Element (25) beinhaltet, welches es ermöglicht, thermische Energie in die Komponente (20) einzubringen oder daraus zu extrahieren.

9. Vorrichtung nach Anspruch 8, wobei das Material ein Material mit Formgedächtnis ist.

10. Vorrichtung nach einem der Ansprüche 8 oder 9, wobei das Element ein Aufwärmer (25) ist, der eine Anhebung der Temperatur des Materials der Komponente (20) ermöglicht.

11. Vorrichtung nach einem der vorhergehenden Ansprüche, wobei, bei dem zweiten der beiden Werte der charakteristischen Abmessung der Komponente (20) entlang der Achse (21), die Spannung des Zugelements (12) gleich null ist.

12. Vorrichtung nach einem der vorhergehenden Ansprüche, zudem beinhaltend eine Feder (30), die zwischen dem zweiten Ende (15) des Zugelements (12) und dem mindestens einen Anhang (AP) angeordnet ist, wobei die Feder (30) konfiguriert ist, um das erste Ende (14) des Zugelements (12) nach Betätigung des Mechanismus (13) aus dem Mechanismus (13) herauszuziehen.

## Claims

1. Device for retaining and releasing appendages (AP), the device (10) including:
• a fixed base (11),
• a tie rod (12) extending along an axis (21) between two ends (14, 15),
• a mechanism (13) fastened to the base and temporarily retaining a first one of the ends (14) of the tie rod (12), wherein operating the mechanism makes it possible to release the tie rod (12) from the base (11), the mechanism (13) comprising a clamp for retaining the first end (14) of the tie rod (12),
• an end piece (16) fastened to a second one of the ends (15) of the tie rod (12),
• at least one appendage (AP) temporarily retained between the base (11) and the end piece (16),
• a component (20) disposed between the mechanism (13) and the end piece (16), the component being independent from the mechanism (13),
• and an actuator (25) of the component (20) making it possible to modify a characteristic dimension of the component (20) along the axis (21) between two values, wherein the component (20) ensures tension of the tie rod (12) for a first one of the two values and the tension of the tie rod (12) being reduced for a second one of the two values, wherein the actuator (25) is independent from the mechanism (13), the device being **characterized in that** it further comprises a device for operating the clamp to release the first end of the tie rod.

2. Device according to claim 1, wherein the component (20) is shaped as a washer configured to slide along the tie rod (12) during assembly of the device (10).

3. Device according to any one of the preceding claims, wherein the tie rod (12) has a characteristic dimension perpendicularly to its axis (21) between its two ends and wherein the component (20) is pierced with a characteristic dimension greater than the characteristic dimension of the tie rod (12) so as to be able to slide along the tie rod during assembly of the device (10).

4. Device according to any one of the preceding claims, wherein the component (20) is disposed between the mechanism (13) and the base (11).

5. Device according to any one of claims 1 to 3, wherein the component (20) is disposed between the base (11) and the at least one appendage (AP).

6. Device according to any one of claims 1 to 3, wherein the component (20) is disposed between the at least one appendage (AP) and the end piece (16).

7. Device according to any one of claims 1 to 3, including at least two appendages (AP) and wherein the component (20) is disposed between two appendages (AP).

8. Device according to any one of the preceding claims, wherein the component (20) comprises a material of particular thermal expansion and wherein the actuator comprises an element (25) for feeding thermal energy to or extracting thermal energy from the component (20).

9. Device according to claim 8, wherein the material is a shape memory material.

10. Device according to either one of claims 8 or 9, wherein the element is a heater (25) for raising the temperature of the material of the component (20).

11. Device according to any one of the preceding claims, wherein the tension in the tie rod (12) is null for the second one of the two characteristic dimension values of the component (20) along the axis (21).

12. Device according to any one of the preceding claims, further including a spring (30) disposed between the second end (15) of the tie rod (12) and the at least one appendage (AP), the spring (30) being configured to extract the first end (14) of the tie rod (12) out of the mechanism (13) after the mechanism (13) is operated.
